Europäisches Patentamt

European Patent Office

Office européen des brevets

(11) Veröffentlichungsnummer: **0 456 128 A2**

## EUROPÄISCHE PATENTANMELDUNG

(21) Anmeldenummer: 91107202.3

(22) Anmeldetag: 03.05.91

(51) Int. Cl.⁵: **H04M 3/54**, H04Q 3/72

(30) Priorität: 11.05.90 DE 4015088

(43) Veröffentlichungstag der Anmeldung:
**13.11.91 Patentblatt 91/46**

(84) Benannte Vertragsstaaten:
**FR GB IT NL SE**

(71) Anmelder: **TELENORMA GMBH**
**Mainzer Landstrasse 128-146**
**W-6000 Frankfurt/Main(DE)**

(72) Erfinder: **Pohle, Ulrich, Dipl.-Ing.**
**Weidrichstrasse 24**
**W-6234 Hattersheim 2(DE)**

(54) Verfahren zur Rufumleitung oder Rufweiterleitung in Kommunikations-Vermittlungsanlagen.

(57)
2.1 Es soll eine automatische selektive Rufumleitung oder Rufweiterleitung bei einer ankommenden Verbindung in Abhängigkeit von einer den Anrufer kennzeichnenden Information stattfinden, ohne daß jeweils manuelle Eingaben für die betreffende Rufumleitung notwendig sind.

2.2 Es ist eine Rufumleitesteuerung vorgesehen, welche einer angerufenen Stelle zugeordnet einen Anrufspeicher enthält, worin die Adressen oder Rufnummern möglicher Anrufer abgelegt sind. Diesen jeweils einen Anrufer kennzeichnenden Informationen zugeordnet sind Adressen oder Rufnummern von bei Rufumleitung anzusteuernden Stellen eingespeichert. Es ist ein Register vorgesehen, worin die den Ursprung einer aktuell ankommenden Verbindung kennzeichnende Information empfangen und vorübergehend zwischengespeichert wird. Diese Information wird verglichen mit den Adressen möglicher Anrufer. Bei gefundener Übereinstimmung wird die dazugehörende Adresse oder Rufnummer der anderen anzurufenden Stelle für einen weiteren Verbindungsaufbau zur Verfügung gestellt.

2.3 Mit dem Verfahren wird erreicht, daß bei einer Rufumleitung oder Rufweiterleitung gezielt in Abhängigkeit der jeweils ankommenden Verbindung eine ganz bestimmte Umleitestelle angesteuert wird.

Fig. 1

Die Erfindung betrifft ein Verfahren zur Rufumleitung oder Rufweiterleitung in Kommunikations-Vermittlungsanlagen nach dem Oberbegriff des Patentanspruchs 1.

In dem DE-Fachbuch "Nachrichtenvermittlung: Grundsätze und Systemmerkmale bei Fernsprech- und Datennetzen" von H. Oden sind ab Seite 98 unter dem Begriff "Abwesenheitsdienste" Merkmale beschrieben, die eine Rufumleitung, bzw. ein Weiterschicken oder eine Umlenkung von Anrufen betreffen. Bei einem Nachschicken von Anrufen wird der Vermittlungsanlage die Rufnummer eines Ersatzanschlusses eingegeben, zu dem dann alle das ursprüngliche Ziel erreichende Anrufe umgelenkt werden. Diese sogenannte Suchschaltung ist nur dazu geeignet, ein einziges Ersatzziel anzusteuern. Wenn, wie auf Seite 99 erwähnt, ein Ersatzanschluß fallweise ermittelt werden soll, so sind dazu Personensuchanlagen erforderlich. Hierzu ist es notwendig, daß eintreffende Anrufe auf einen Betriebsdienstplatz gelenkt werden, von wo aus die Personensuchanlage aktiviert werden kann. Wenn auf diese Weise ermittelt worden ist, wo sich die gesuchte Person aufhält, so kann durch eine manuelle Bedienungsprozedur der Anruf in bekannter Weise dorthin vermittelt werden.

Das Weiterschicken von Anrufen kann von einer Vermittlungsstelle aus bewirkt werden, oder bei einem Teilnehmeranschluß vorgesehen sein. Bei den vorbeschriebenen Merkmalen ist lediglich ein einziges Ziel vorgesehen, und es ist keine automatische Selektion eines Ersatzzieles möglich.

Eine diskrete Rufweiterleitung ist aus der EP-OS 0 216 381 bekannt. Dabei handelt es sich um eine Einrichtung, welche in Endgeräten vorgesehen ist, die an ein Dienste integrierendes Digitalnetz angeschlossen sind. In einem derartigen Digitalnetz ist vorgesehen, daß eine einen Anrufer kennzeichnende Information zu der angerufenen Stelle übertragen wird. Diese Information wird bei dem jeweils angerufenen Endgerät angezeigt. Der Teilnehmer kann dann entscheiden, ob er den betreffenden Anruf entgegennehmen will oder nicht. Außerdem hat der angerufene Teilnehmer die Möglichkeit, die betreffende ankommende Verbindung zu einer anderen Stelle weiterzuleiten. Zu diesem Zweck muß ein Teilnehmer die Rufnummer oder Adresse derjenigen Stelle manuell eingeben, zu der der betreffende Anruf weitergeleitet werden soll. Die dabei entstehenden Informationen werden in einem Signalisierungskanal zur Vermittlungsanlage übertragen, so daß dort die Rufumleitung durchgeführt werden kann. Um dieses Merkmal zu bewirken, muß die Anzeige beobachtet werden, damit in Abhängigkeit vom jeweiligen Anrufer ein geeignetes Ersatzziel ermittelt werden kann. Dies bedeutet jedoch, daß an dem jeweils angerufenen Anschluß eine Person anwesend sein muß.

Die Aufgabe der Erfindung besteht darin, ein Verfahren anzugeben, womit eine automatische selektive Rufumleitung oder Rufweiterleitung bei einer ankommenden Verbindung in Abhängigkeit von einer den Anrufer kennzeichnenden Information stattfinden kann. Dabei soll es nicht notwendig sein, daß eine Person an der ursprünglich angesteuerten Stelle anwesend sein muß, um manuelle Eingaben für eine Rufumleitung oder Rufweiterleitung vornehmen zu können.

Für die Lösung dieser Aufgabe ist eine Merkmalskombination vorgesehen, wie sie im Patentanspruch 1 angegeben ist.

Damit wird in vorteilhafter Weise erreicht, daß bei einer Rufumleitung oder Rufweiterleitung einem Anrufer eine optimale Ersatzstelle angeboten werden kann, wenn an der ursprünglich angesteuerten Stelle der Anruf nicht entgegengenommen werden kann. So kann beispielsweise ein Kunde, der einen bestimmten, aber nicht anwesenden Sachbearbeiter zu sprechen wünscht, mit einem Vertreter verbunden werden, welcher über die Angelegenheiten des betreffenden Kunden informiert ist. Das Ziel einer Rufumleitung oder Rufweiterleitung wird also jeweils in Abhängigkeit vom Ursprung einer ankommenden Verbindung angesteuert.

In den Unteransprüchen sind vorteilhafte Varianten und Weiterbildungen der Erfindung angegeben.

Ein Ausführungsbeispiel der Erfindung wird nachfolgend anhand von Zeichnungen näher erläutert. Es zeigt

Fig. 1 das Blockschaltbild einer Kommunikations-Vermittlungsanlage mit integrierter Rufumleitesteuerung.

Fig. 2 das Blockschaltbild einer Kommunikations-Vermittlungsanlage mit in einer Datenverarbeitungseinrichtung untergebrachten Rufumleitesteuerung.

Fig. 3 das Blockschaltbild einer Kommunikations-Vermittlungsanlage mit in einem Teilnehmer-Endgerät untergebrachten Rufumleitesteuerung.

Fig. 4 das Blockschaltbild einer Rufumleitesteuerung.

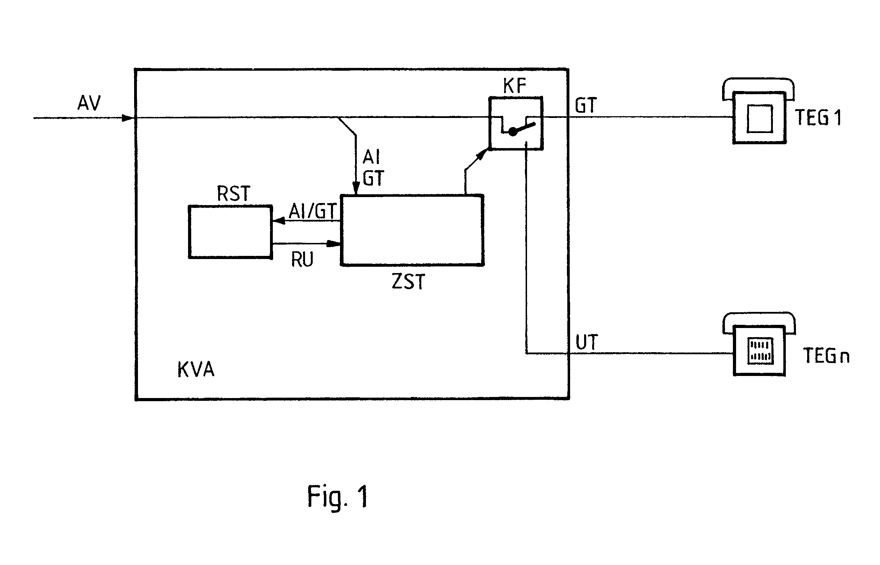

Die in der Fig. 1 dargestellte Kommunikations-Vermittlungsanlage KVA enthält eine zentrale Steuerung ZST und eine mit dieser zusammenarbeitende Rufumleitesteuerung RST. Es sei angenommen, daß eine ankommende Verbindung AV aufgrund der empfangenen Wahlinformation zu einer gerufenen Teilnehmerstelle GT durchgeschaltet werden soll. Somit würde eine Verbindung zu einem daran angeschlossenen Teilnehmerendgerät TEG1 bestehen. Wenn nun für diese gerufene Teilnehmerstelle GT eine Rufumleitung oder Rufweiterleitung aktiviert ist, so muß die ankommende Verbindung AV zu einer anderen Stelle, der Umleitestelle UT durchgeschaltet werden. Daran ist beispielsweise ein Teilnehmerendgerät TEGn angeschlossen. Um dies zu verdeutlichen, ist ein Koppelfeld KF mit einem Umschaltkontakt dargestellt.

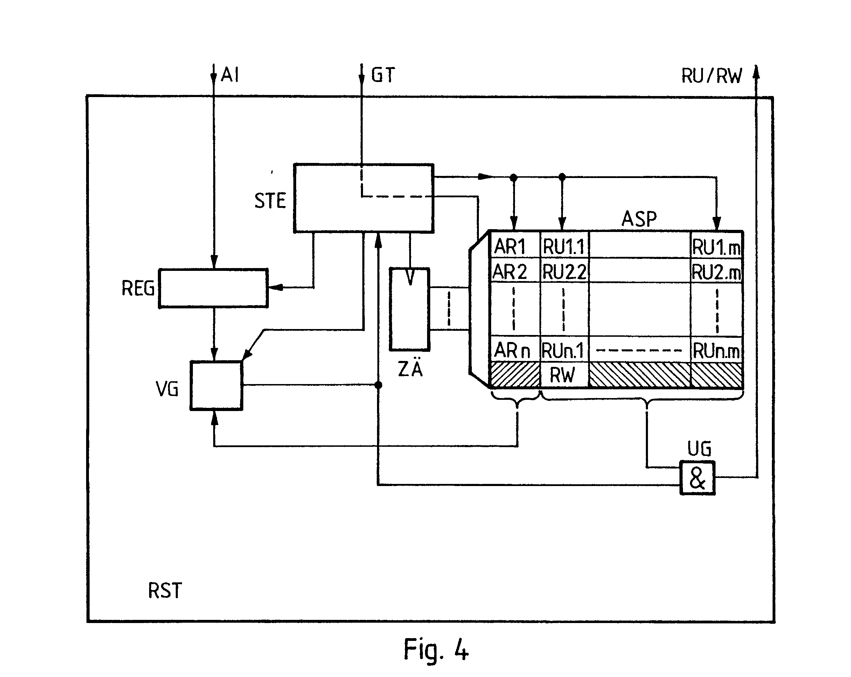

Um eine ankommende Verbindung AV zu der jeweils gewünschten Umleitestelle UT steuern zu können, wird die empfangene Information AI über den Ursprung der Verbindung zusammen mit der Wahlinformation, welche die ursprünglich gerufene Teilnehmerstelle GT kennzeichnet, von der zentralen Steuerung ZST an die Rufumleitesteuerung RST übergeben. Die Rufumleitesteuerung RST erzeugt daraufhin eine Adresse oder Rufnummer RU einer Umleitestelle UT und übergibt diese der zentralen Steuerung ZST. Wie diese Rufnummer oder Adresse RU im einzelnen erzeugt wird, wird später anhand der Fig. 4 beschrieben. Die Zentrale Steuerung ZST ist dann in der Lage, im Koppelfeld KF andere Wege einzustellen, so daß die ankommende Verbindung AV zu der Umleitestelle UT gelangt.

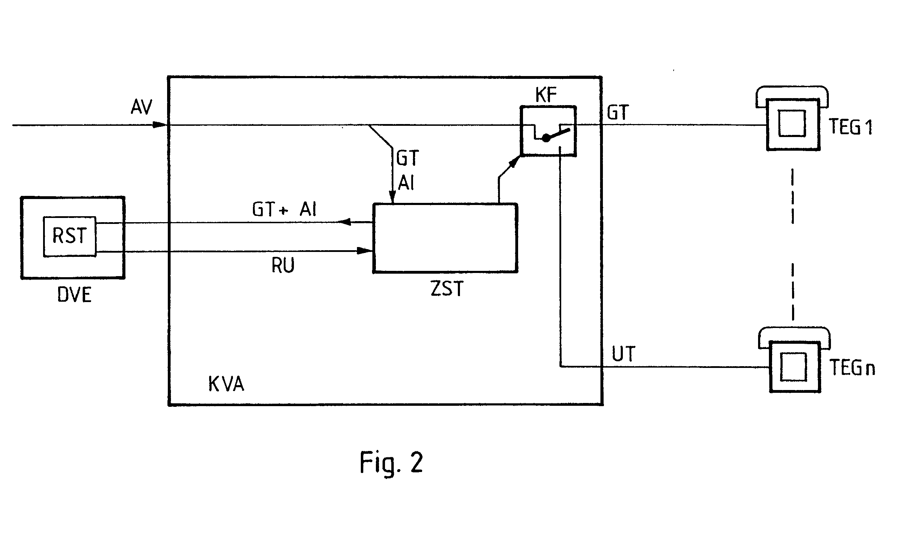

Bei der in Fig. 2 gezeigten Ausführungsform ist die Rufumleitesteuerung RST außerhalb der Kommunikations-Vermittlungsanlage KVA innerhalb einer Datenverarbeitungseinrichtung DVE untergebracht. Für den Fall, daß für eine gerufene Teilnehmerstelle GT eine Rufumleitung oder Rufweiterleitung aktiviert ist, erhält die Datenverarbeitungseinrichtung DVE und damit die darin befindliche Rufumleitesteuerung RST von der zentralen Steuerung ZST wie vorher beschrieben die Daten der gerufenen Teilnehmerstelle GT sowie die Anruferinformation AI. Die weiteren Vorgänge verlaufen so, wie dies bereits anhand der Fig. 1 beschrieben worden ist.

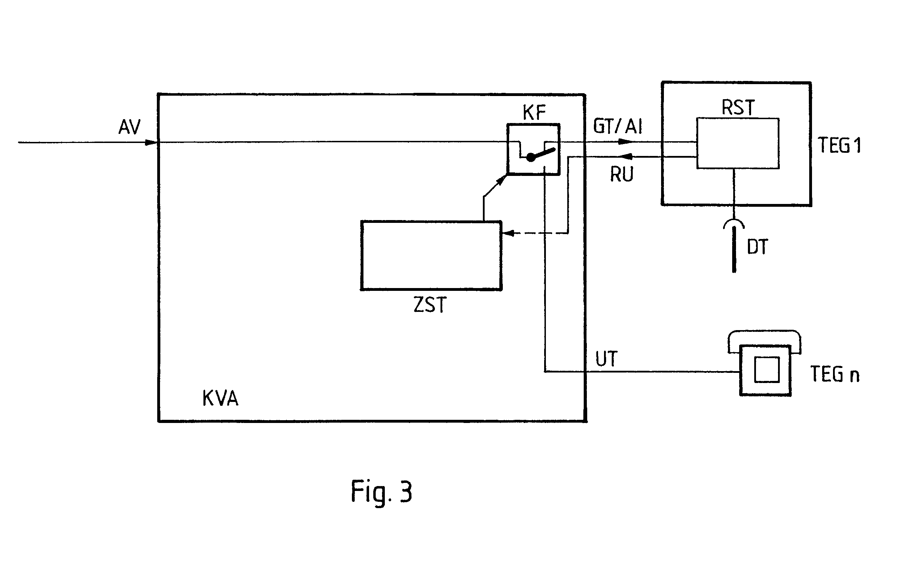

Die Fig. 3 zeigt eine Anordnung, bei der die Rufumleitesteuerung RST in einem Teilnehmerendgerät TEG1 untergebracht ist. Die Vorgänge, welche zur Erzeugung einer Adresse oder Rufnummer für eine Rufumleitung oder Rufweiterleitung erforderlich sind, laufen in gleicher Weise ab, wie dies bereits anhand der Fig. 2 beschrieben worden ist. Bei einer derartigen Anordnung besteht die Möglichkeit, den Anruferspeicher ASP, dessen Einzelheiten anhand der Fig. 4 näher erläutert werden, auf einem Datenträger DT unterzubringen, welcher in ein Lesegerät eingeführt wird. Für den Benutzer eines solchen Teilnehmerendgerätes TEG1 besteht dann die Möglichkeit, vorher zu bestimmen, welche Umleitestellen UT von ankommenden Verbindungen AV angesteuert werden sollen.

Bei den ankommenden Verbindungen AV kann es sich um Verbindungen handeln, die von einer anderen Vermittlungsstelle angeboten werden oder auch um Verbindungen, welche von Anschlüssen der gleichen Kommunikations-Vermittlungsanlage KVA kommen. Es ist auch denkbar, daß mit der Rufnummer RU für eine Umleitestelle UT eine abgehende Verbindung von der Kommunikations-Vermittlungsanlage aus aufgebaut wird, wenn die Umleitestelle UT nur über eine fremde Vermittlungsstelle erreichbar ist.

Das in Fig. 4 gezeigte Blockschaltbild zeigt mehr im Detail das Zusammenwirken einer Steuereinrichtung STE, mit einem Anruferspeicher ASP, einem Register REG und einem Vergleicher VG. Wenn von der Kommunikations-Vermittlungsanlage die Adresse oder Rufnummer einer gerufenen Teilnehmerstelle GT angeboten wird, so wird damit ein bestimmter Anruferspeicher ASP oder ein dementsprechender Bereich innerhalb eines größeren Speichergebildes angesteuert. Eine solche Selektion erübrigt sich selbstverständlich, wenn die Rufumleitesteuerung RST innerhalb eines Teilnehmerendgerätes TEG1 untergebracht ist.

Die über eine ankommende Verbindung AV einlaufende, deren Ursprung kennzeichnende Information AI wird in ein Register REG vorübergehend eingespeichert. Von der Steuereinrichtung STE wird nun ein Zähler ZÄ getaktet, welcher fortlaufend Adressen für den Anruferspeicher ASP liefert. Damit werden die einzelnen Zeilen des Anruferspeichers ASP adressiert. Die in einer besonderen Spalte eingespeicherten Adressen oder Rufnummern möglicher Anrufer AR werden dabei ausgelesen und einem Vergleicher VG angeboten. Wenn der Vergleicher VG bei diesem Vorgang eine Übereinstimmung zwischen der im Register REG enthaltenen Information über den Anrufer AI und einer der Adressen oder Rufnummern möglicher Anrufer AR feststellt, so wird dies zunächst der Steuereinrichtung STE gemeldet, so daß die jeweils zugeordnete Adresse oder Rufnummer der bei Rufumleitung anzurufenden Stelle, z. B. RU1.1, also der Umleitestelle UT ausgelesen werden kann. Diese Rufnummer oder Adresse RU gelangt über ein UND-Gatter UG, welches nur bei positivem Vergleichsergebnis geöffnet ist, zu der Kommunikations-Vermittlungsanlage KVA. Damit wird, wie bereits beschrieben worden ist, die Rufumleitestelle UT angesteuert.

Im Anruferspeicher ASP können jeder den Ursprung einer ankommenden Verbindung kennzeichnenden Information AI beziehungsweise jedem möglichen Anrufer AR zugeordnet mehrere Adressen oder Rufnummern, z. B. RU1.1 bis RU1.m, zugeordnet sein. Es besteht dann die Möglichkeit, eine weitere Adresse oder Rufnummer RU aus dem Anruferspeicher ASP auszulesen, wenn die zunächst angesteuerte Umleitestelle UT besetzt ist oder aus anderen Gründen nicht erreicht werden kann.

Außerdem ist im Anruferspeicher ASP in der letzten Zeile eine weitere Rufnummer oder Adresse RW eingetragen, welche ausgelesen wird, wenn keine Übereinstimmung zwischen der den Ursprung einer ankommenden Verbindung kennzeichnenden Information AI und den Adressen oder Rufnummern möglicher Anrufer AR während eines Suchzyklus erkannt werden konnte. Wenn also eine ankommende Verbindung AV eine Information AI über ihren Ursprung mitbringt, deren Daten nicht im Anruferspeicher ASP abgelegt sind, so wird diese weitere Adresse oder Rufnummer RW ausgelesen. Damit wird sichergestellt, daß auf jeden Fall eine Rufumleitung oder Rufweiterleitung stattfindet, so daß eine ankommende Verbindung AV beantwortet werden kann.

Die Eingabe der Daten in den Anruferspeicher ASP kann auf nicht dargestellte Weise entweder direkt von einem Teilnehmerendgerät, z. B. TEG1 aus vorgenommen werden, wobei mit der Identitätskennung dieses Anschlusses (GT) der betreffende Anruferspeicher ASP oder ein entsprechender Bereich innerhalb eines größeren Speichergebildes angesteuert wird. Es muß dann jeweils zuerst die Rufnummer oder Adresse eines möglichen Anrufers, z. B. AR1, eingegeben werden, und sodann die dazugehörigen Rufnummern oder Adressen, im Beispiel RU1.1 bis RU1.m. Die Eingabe aller für einen Anruferspeicher ASP notwendigen Daten kann jedoch auch von einer zentralen Stelle aus vorgenommen werden. Bei der Eingabe derartiger Daten kann ein Dialog zwischen der Rufumleitesteuerung RST und dem Eingabegerät stattfinden. Die in einem Anruferspeicher ASP abgelegten Daten können zur Kontrolle angezeigt oder ausgedruckt werden.

Bei der Rufumleitung, beziehungsweise Rufweiterleitung kann auch so vorgegangen werden, daß zunächst die ursprünglich angerufene Stelle GT angesteuert wird, und die Rufumleitesteuerung RST erst dann aktiviert wird, wenn der Rufzustand einige Zeit besteht, ohne daß eine Teilnehmermeldung erfolgt. Auch in diesem Fall ist mit Hilfe der Rufumleitesteuerung RST eine selektive Rufumleitung oder Rufweiterleitung möglich.

**Patentansprüche**

1. Verfahren zur Rufumleitung oder Rufweiterleitung in Kommunikations-Vermittlungsanlagen, wobei eine ankommende Verbindung sofort oder nach Ablauf einer Zeit zu einer anderen Stelle weitervermittelt wird, indem eine Verbindung oder ein Teil davon neu aufgebaut wird, so daß von der danach angesteuerten Stelle aus die Verbindung entgegengenommen werden kann, und wobei bei einer ankommenden Verbindung den Anrufer kennzeichnende Informationen empfangen werden,
dadurch gekennzeichnet,
daß in der Kommunikations-Vermittlungsanlage (KVA) eine Rufumleitesteuerung (RST) vorgesehen ist, die einer angerufenen Stelle (GT) zugeordnet einen Anruferspeicher (ASP) oder einen Speicherbereich enthält, worin die Adressen oder Rufnummern möglicher Anrufer (AR) abgelegt sind,
daß diesen jeweils einen Anrufer (AR) kennzeichnenden Informationen zugeordnet Adressen oder Rufnummern von bei Rufumleitung anzurufenden Stellen (RU) eingespeichert sind,
daß ein Register (REG) vorgesehen ist, worin die den Ursprung einer aktuell ankommenden Verbindung kennzeichnende Information (AI) empfangen und vorübergehend zwischengespeichert wird,
daß diese Information (AI) durch einen Vergleicher (VG) mit den im Anruferspeicher (ASP) befindlichen Adressen oder Rufnummern möglicher Anrufer (AR) verglichen wird, und daß bei gefundener Übereinstimmung die dazu gehörende Adresse oder Rufnummer (z. B. RU1.1) der anderen anzurufenden Stelle ausgelesen und der Kommunikations-Vermittlungsanlage (KVA) für einen weiteren Verbindungsaufbau zur Verfügung gestellt wird.

2. Verfahren nach Anspruch 1,
dadurch gekennzeichnet,
daß zum Absuchen des Anruferspeichers (ASP) ein Zähler (ZÄ) vorgesehen ist, der schrittweise Ansteueradressen für den Anruferspeicher (ASP) liefert.

3. Verfahren nach Anspruch 1,
dadurch gekennzeichnet,
daß an letzter Stelle im Anruferspeicher (ASP) die Adresse oder Rufnummer (RW) einer weiteren anzurufenden Stelle eingespeichert ist, die der Kommunikations-Vermittlungsanlage (KVA) für einen weiteren Verbindungsaufbau zur Verfügung gestellt wird, wenn beim Absuchen des Anruferspeichers (ASP) keine Übereinstimmung mit der bei einer ankommenden Verbindung empfangenen Information (AI) festgestellt wird.

4. Verfahren nach Anspruch 1, dadurch gekennzeichnet, daß den jeweils einen Anrufer kennzeichnenden Informationen (AR) zugeordnet Adressen oder Rufnummern von zusätzlichen anzurufenden Stellen (RU1.2 bis RUn.m) eingespeichert sein können, zu denen nacheinander Umleitungsverbindungen aufbaubar sind.

5. Verfahren nach Anspruch 1, dadurch gekennzeichnet, daß eine Zeitverzögerung vorgesehen ist, so daß das Absuchen des Anruferspeichers (ASP) erst nach einigen Rufsignalen beginnt, wenn sich an der ursprünglich angerufenen Stelle niemand meldet.

6. Verfahren nach Anspruch 1, dadurch gekennzeichnet, daß die Rufumleitesteuerung (RST) mit dem Anruferspeicher (ASP) in einer an die Kommunikations-Vermittlungsanlage (KVA) angeschlossenen Datenverarbeitungseinrichtung (DVE) untergebracht ist.

7. Verfahren nach Anspruch 1, dadurch gekennzeichnet, daß die Rufumleitesteuerung (RST) mit dem Anruferspeicher (ASP) in einem an die Kommunikations-Vermittlungsanlage (KVA) angeschlossenen Kommunikations-Endgerät (z. B. TEG1) untergebracht ist.

8. Verfahren nach Anspruch 7, dadurch gekennzeichnet, daß der Anruferspeicher (ASP) sich auf einem Datenträger (DT) befindet, der in eine zu einem Kommunikations-Endgerät (z. B. TEG1) gehörende Leseeinrichtung eingebracht wird.

Fig. 1

EP 0 456 128 A2

Fig. 2

TEG 1

RST

DT

GT/AI

RU

TEG n

UT

KF

ZST

KVA

AV

Fig. 3

Fig. 4